# EUROPEAN PATENT APPLICATION

(11) **EP 4 546 505 A1**
(43) Date of publication of application: **30.04.2025**
(21) Application number: 23915472.7
(22) Date of filing: 23.04.2023
(51) Int. Cl.: H01M 10/613

(54) **BATTERY AND ELECTRICAL APPARATUS**

(30) Priority: 12.01.2023 CN 202320130709 U
(71) Applicant: Contemporary Amperex Technology (Hong Kong) Limited, Hong Kong (HK)
(72) Inventor: CHEN, Xingdi, Ningde, Fujian 352100 (CN); HE, Runyong, Ningde, Fujian 352100 (CN)
(74) Representative: Herrmann, Uwe
(86) International application number: PCT/CN2023/090154
(87) International publication number: WO 2024/148708

(57) **Abstract**

A battery and an electrical apparatus are provided in the present application. The battery comprises a plurality of battery cells and a heat exchange member. Each battery cell comprises a housing and a pressure relief mechanism, the housing has a first wall and a second wall opposite to each other in a first direction, the pressure relief mechanism is disposed in the first wall, and the plurality of battery cells are arranged at least in a second direction. The heat exchange member is disposed at the side of the plurality of battery cells close to the second walls, the heat exchange member has a heat exchange zone, the heat exchange zone extends in the second direction and a third direction, and the first direction, the second direction and the third direction intersect one another. The heat exchange zone is used for heat exchange with the battery cells, and the second walls of the plurality of battery cells cover the heat exchange zone. The battery provided in the embodiments of the present application is conducive to reducing the possibility of producing condensate water on a surface of the heat exchange member, thereby reducing the risk of short circuits in the battery caused by dripping of the condensate water produced on the heat exchange member onto members such as electrode terminals of the battery cells, and improving the safety performance of the battery.

## Description

### CROSS REFERENCE TO RELATED APPLICATION

The present application claims priority to Chinese Patent Application No. 202320130709.8, entitled "BATTERY AND ELECTRICAL APPARATUS" filed on January 12, 2023, which is incorporated herein by reference in its entirety.

### FIELD

The present application relates to the field of battery manufacturing technology, in particular to a battery and an electrical apparatus.

### BACKGROUND

Batteries are widely used in electronic devices such as mobile phones, laptops, electric scooters, electric cars, electric airplanes, electric boats, electric toy cars, electric toy boats, electric toy airplanes, and electric tools. Battery cells may include cadmium nickel battery cells, hydrogen nickel battery cells, lithium-ion battery cells, secondary alkaline zinc manganese battery cells, etc.

In the development of battery technology, in addition to improving the use performance of batteries, how to improve the safety performance of batteries is also a non-negligible issue. Therefore, how to improve the safety performance of batteries is a continuously improving technical issue in the battery technology.

### SUMMARY

The present application provides a battery and an electrical apparatus, where the safety performance of the battery can be improved.

In a first aspect, a battery provided in the embodiments of the present application includes a plurality of battery cells and a heat exchange member; each of the battery cells includes a housing and a pressure relief mechanism, the housing has a first wall and a second wall opposite to each other in a first direction, the pressure relief mechanism is disposed in the first wall, and the plurality of battery cells are arranged at least in a second direction; the heat exchange member is disposed at the side of the plurality of battery cells close to the second walls, the heat exchange member has a heat exchange zone, the heat exchange zone extends in the second direction and a third direction, and the first direction, the second direction and the third direction intersect one another; the heat exchange zone is used for heat exchange with the battery cells, and the second walls of the plurality of battery cells cover the heat exchange zone.

According to the battery provided by the embodiments of the present application, the second walls of the plurality of battery cells cover the heat exchange zone of the heat exchange member, which reduces the possibility of producing condensate water on the surface of the heat exchange member, thereby reducing the risk of short circuits in the battery caused by dripping of the condensate water produced on the heat exchange member onto members such as electrode terminals of the battery cells, and improving the safety performance of the battery.

In some embodiments, the housing has a size of a in the second direction, and in the second direction, a minimum distance d1 between an edge of the heat exchange zone and an outer edge of the second wall of the outermost battery cell satisfies: d1 < a. In this case, the risk of short circuits in the battery caused by dripping of the condensate water produced in the heat exchange zone onto members such as electrode terminals is reduced, and the effect of cooling or heating the battery cells by the heat exchange zone is improved, so as to further improve the safety performance of the battery.

In some embodiments, the size of the housing in the second direction is less than that of the housing in the third direction, and 10 mm ≤ d1 ≤ a/3. The possibility of producing condensate water on the surface of the heat exchange zone is further reduced, the heat exchange effect between the heat exchange zone and the outermost battery cell in the second direction is ensured, and the risk of excessively low or high temperature of the outermost battery cell in the second direction is reduced.

In some embodiments, the housing has a size of b in the third direction, and in the third direction, a minimum distance d2 between the edge of the heat exchange zone and an edge of the second wall of the outermost battery cell satisfies: d2 < b. In this case, the risk of short circuits in the battery caused by dripping of the condensate water produced in the heat exchange zone onto members such as electrode terminals is reduced, and the effect of cooling or heating the battery cells by the heat exchange zone is improved, so as to further improve the safety performance of the battery.

In some embodiments, the size of the housing in the third direction is greater than that of the housing in the second direction, and 10 mm ≤ d2 ≤ b/6. The possibility of producing condensate water on the surface of the heat exchange zone is further reduced, the heat exchange effect between the heat exchange zone and the outermost battery cell in the third direction is ensured, and the risk of excessively low or high temperature of the outermost battery cell in the third direction is reduced.

In some embodiments, the battery cell further includes an electrode terminal, and the electrode terminal is disposed in the first wall. In this case, the plurality of battery cells can be arranged in both the second direction and the third direction, which is beneficial to increasing the arrangement density of the battery cells, improving the internal space utilization of the battery, and further increasing the energy density of the battery. In addition, during the assembly of the battery, the first wall of the battery cell can be disposed downwards, and the bottom space of the battery cell coincides with the pressure relief space of the battery cell, which save space and improve the assembly efficiency of the battery cells.

In some embodiments, the battery cell further includes an electrode terminal, the housing further has a third wall, the third wall is parallel to the second direction, and the electrode terminal is disposed in the third wall. Thus, the plurality of battery cells are spaced apart in the third direction, which is conducive to timely heat dissipation of the battery cells and reducing the risk of thermal runaway of the battery cells.

In some embodiments, a flow channel is provided in the heat exchange zone of the heat exchange member, the heat exchange member has a liquid inlet and liquid outlets, and the flow channel connects the liquid inlet and the liquid outlets; the size of the heat exchange zone in the second direction is greater than that of the heat exchange zone in the third direction, the liquid outlets are located on two sides of the heat exchange member in the second direction, and in the second direction, an absolute value of the difference between the farthest distances from the liquid inlet to the heat exchange zones at two sides respectively is less than or equal to 100 mm. Thus, when a flowing medium flows from the liquid inlet to the liquid outlets, the flowing distance of the flowing medium in the flow channel is increased, which facilitates sufficient heat exchange between the flowing medium and the battery cells and improves the utilization of the flowing medium.

In some embodiments, the plurality of heat exchange zones are spaced apart in the second direction and the third direction, and in the third direction, the flow channels of any adjacent two of the heat exchange zones are connected in parallel. In this case, the flowing medium is shunted when flowing through adjacent two of the heat exchange zones in the third direction, flows to the liquid outlets after passing through the plurality of heat exchange zones arranged in the third direction, thereby reducing the risk of circulation of the flowing medium in the plurality of heat exchange zones and improving the heat exchange effect between the cold flowing medium and the battery cells.

In some embodiments, the heat exchange member has the plurality of heat exchange zones, the heat exchange member further includes a connecting flow channel, and the connecting flow channel connects two of the flow channels of adjacent two of the heat exchange zones; the battery further includes a busbar, the busbar electrically connects the battery cells corresponding to adjacent two of the heat exchange zones, and a projection of the connecting flow channel on the heat exchange member in the first direction is staggered with a projection of the busbar on the heat exchange member in the first direction. Thus, the risk of dripping of the condensate water produced at the flow channels onto the busbar is reduced, and the safety performance of the battery is further improved.

In a second aspect, an embodiment of the present application provides an electrical apparatus, including the battery as in the embodiments of the first aspect, where the battery is used for providing electrical energy; and the first wall is located below the housing in a direction of gravity.

The electrical apparatus according to the embodiment of the present application, including the battery provided by the embodiments of the present application, has the same technical effects, which will not be repeated here.

### BRIEF DESCRIPTION OF THE DRAWINGS

In order to explain the technical solutions of the embodiments of the present application more clearly, the drawings required for use in the embodiments of the present application will be briefly introduced below. Apparently, the drawings described below show only some embodiments of the present application. Those skilled in the art can derive other drawings based on the drawings without any creative effort.
FIG. 1 is a schematic structural view of a vehicle provided in an embodiment of the present application;
FIG. 2 is an exploded view of a battery provided in an embodiment of the present application;
FIG. 3 is a schematic structural view of a battery module in the battery provided in an embodiment of the present application;
FIG. 4 is an exploded view of a battery cell in the battery provided in an embodiment of the present application;
FIG. 5 is a front view of a battery provided in an embodiment of the present application;
FIG. 6 is an exploded structural view of another battery provided in an embodiment of the present application;
FIG. 7 is a front structural view of the battery shown in FIG. 6;
FIG. 8 is a cross-sectional structural view of FIG. 7 along line B-B;
FIG. 9 is a partial enlarged view of place D in FIG. 8;
FIG. 10 is a cross-sectional structural view of FIG. 7 along line A-A;
FIG. 11 is a partial enlarged view of place C in FIG. 10; and
FIG. 12 is a schematic structural view of a heat exchange member in the battery provided in an embodiment of the present application.

The drawings are not drawn to actual scale.

### Reference numerals:

1. Vehicle; 1a. Motor; 1b. Controller;
10. Battery; 11. First box portion; 12. Second box portion;
20. Battery module;
30. Battery cell; 31. Housing; 31a. Accommodating cavity; 311. Shell; 311a. Opening; 312. End cover; 313. First wall; 314. Second wall; 315. Third wall; 32. Electrode assembly; 33. Electrode terminal; 34. Pressure relief mechanism;
40. Heat exchange member; 40a. Heat exchange zone; 41. Flow channel; 42. Liquid inlet; 43. Liquid outlet;
X. First direction; Y. Second direction; Z. Third direction.

### DETAILED DESCRIPTION

Implementations of the present application will be further described in detail below in conjunction with the drawings and embodiments. The detailed description of the following embodiments and the drawings are used for illustrating the principle of the present application, but cannot be used for limiting the scope of the present application, that is, the present application is not limited to the described embodiments.

In the description of the present application, it should be noted that, unless otherwise specified, "plurality of" means two or more; the orientations or positional relationships indicated by the terms "upper", "lower", "left", "right", "inner", "outer", etc. are only for facilitating description of the present application and simplifying the description, but do not indicate or imply that the pointed apparatuses or elements must have specific orientations or be constructed and operated in specific orientations. Therefore, the terms should not be understood to limit the present application. Furthermore, the terms "first" and "second" are only for the sake of description, and cannot be understood as indicating or implying the relative importance. "Vertical" does not require being strictly vertical, but allows for an allowable range of error. "Parallel" does not require being strictly parallel, but allows for an allowable range of error.

The "embodiment" mentioned in the present application means that specific features, structures or characteristics described in conjunction with the embodiment may be included in at least one embodiment of the present application. The phrase appearing at various places in the description does not necessarily refer to the same embodiment, or an independent or alternative embodiment exclusive of other embodiments. Those skilled in the art understand explicitly and implicitly that an embodiment described in the present application may be combined with other embodiments.

In the description of the present application, it should be noted that, unless otherwise specified and defined, the terms "mounted", "connected", and "connection" should be understood in a broad sense, for example, the "connection" may be fixed connected, detachable connection, integral connection, direct connection, or indirect connection by a medium. Those skilled in the art could understand the specific meanings of the above terms in the present application according to specific circumstances.

In the present application, the battery cells may include lithium-ion secondary battery cells, lithium-ion primary battery cells, lithium-sulfur battery cells, sodium lithium-ion battery cells, sodium-ion battery cells, magnesium-ion battery cells, or the like, which are not limited by the embodiments of the present application. The battery cells may be cylindrical, flat, cuboid, or in other shapes, which is also not limited by the embodiments of the present application. The battery cells are generally divided into three types according to ways of packaging: cylindrical battery cells, square battery cells and soft package battery cells, which are also not limited in the embodiments of the present application.

The battery mentioned in the embodiments of the present application refers to a single physical module that includes one or more battery cells to provide higher voltage and capacity. For example, the battery mentioned in the present application may include a battery module or a battery pack. The battery generally includes a box used for packaging one or more battery cells. The box may prevent liquid or other foreign matters from affecting charging or discharging of the battery cell.

The battery cell includes an electrode assembly and an electrolytic solution, where the electrode assembly includes a positive electrode plate, a negative electrode plate, and a separator. The battery cell mainly relies on migration of metal ions between the positive electrode plate and the negative electrode plate to work. The positive electrode plate includes a positive electrode current collector and a positive electrode active material layer applied onto a surface of the positive electrode current collector. The positive electrode current collector includes a positive electrode current collecting portion and a positive electrode protrusion protruding from the positive electrode current collecting portion, the positive electrode current collecting portion is coated with the positive electrode active material layer, at least a portion of the positive electrode protrusion is not coated with the positive electrode active material layer, and the positive electrode protrusion serves as a positive electrode tab. Taking a lithium-ion battery as an example, a material for the positive electrode current collector may be aluminum, the positive electrode active material layer includes a positive electrode active material, and the positive electrode active material may be lithium cobalt oxide, lithium iron phosphate, ternary lithium, lithium manganate, or the like. The negative electrode plate includes a negative electrode current collector and a negative electrode active material layer applied onto a surface of the negative electrode current collector. The negative electrode current collector includes a negative electrode current collecting portion and a negative electrode protrusion protruding from the negative electrode current collecting portion, the negative electrode current collecting portion is coated with the negative electrode active material layer, at least a portion of the negative electrode protrusion is not coated with the negative electrode active material layer, and the negative electrode protrusion serves as a negative electrode tab. The material of the negative electrode current collector may be copper, the negative electrode active material layer includes a negative electrode active material, and the negative electrode active material may be carbon, silicon, or the like. In order to ensure that no fusing occurs when high current passes through, there is a plurality of positive electrode tabs stacked together, and there is a plurality of negative electrode tabs stacked together. The material of the separator may be polypropylene (PP), polyethylene (PE), or the like. Moreover, the electrode assembly may be of a wound structure or a laminated structure, and the embodiments of the present application are not limited thereto.

After discovering the problem that a battery is prone to short-circuiting in the working process, the inventor conducted systematic analysis and research on the structure and working process of the battery. The results showed that some heat exchange zones of a heat exchange member in the battery are not disposed opposite to battery cells, it is more likely to produce condensate water in such zones having temperature differences from the internal environment of the battery, the produced condensate water drips when reaching a certain amount, and there is a risk of dripping onto components such as electrode terminals and busbars of the battery cells; because the electrode terminals and the busbars are conductive in the working process of the battery, the condensate water dripping onto the electrode terminals or the busbars brings short-circuit risks to the battery to affect the safety performance of the battery.

Based on the above problem discovered by the inventor, the inventor made improvements to the structure of the battery. The technical solutions described in the embodiments of the present application are applicable to batteries and electrical apparatuses using the batteries.

The battery according to the embodiments of the present application includes a plurality of battery cells and a heat exchange member, each of the battery cells includes a housing and a pressure relief mechanism, the housing has a first wall and a second wall opposite to each other in a first direction, the pressure relief mechanism is disposed in the first wall, and the plurality of battery cells are arranged at least in a second direction. The heat exchange member is disposed at the side of the plurality of battery cells close to the second walls, the heat exchange member has a heat exchange zone, the heat exchange zone extends in the second direction and a third direction, and the first direction, the second direction and the third direction intersect one another. The heat exchange zone is used for heat exchange with the battery cells, and the second walls of the plurality of battery cells cover the heat exchange zone.

According to the battery provided by the embodiments of the present application, the second walls of the battery cells cover the heat exchange zone of the heat exchange member, which reduces the risk of producing condensate water on the heat exchange member, further reduces the possibility of short circuits in the battery caused by dripping of the condensate water on the heat exchange member onto components such as electrode assemblies, and is beneficial to improving the safety performance of the battery.

The electrical apparatus may be a vehicle, a mobile phone, a portable device, a notebook computer, a ship, a spacecraft, an electric toy, an electric tool, or the like. The vehicle may be an oil-fueled vehicle, a gas vehicle, or a new energy vehicle. The new energy vehicle may be a battery electric vehicle, a hybrid electric vehicle, an extended-range vehicle, or the like. The spacecraft includes an airplane, a rocket, a space shuttle, a spaceship, or the like. The electric toy includes a fixed or mobile electric toy, such as a game console, an electric car toy, an electric ship toy, or an electric aircraft toy. The electric tool includes a metal cutting electric tool, a grinding electric tool, an assembly electric tool, or a railway electric tool, such as an electric drill, an electric grinder, an electric wrench, an electric screwdriver, an electric hammer, an impact electric drill, a concrete vibrator, or an electric planer. The embodiments of the present application do not impose special restrictions on the foregoing electrical apparatus.

For convenient description, the electrical apparatus is a vehicle as an example for description in the following embodiments.

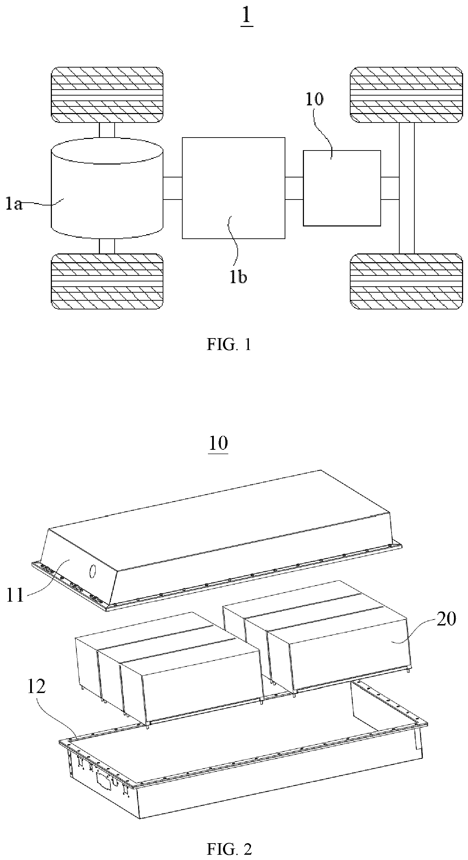

As shown in FIG. 1, a battery 10 is provided inside a vehicle 1. The battery 10 may be disposed in the bottom, front, or rear of the vehicle 1. The battery 10 may be used for supplying power to the vehicle 1. For example, the battery 10 may be used as an operation power supply of the vehicle 1.

The vehicle 1 may further include a controller 1b and a motor 1a. The controller 1b is used for controlling the battery 10 to supply power to the motor 1a, for example, for a working power demand of the vehicle 1 during startup, navigation and running.

In some embodiments of the present application, the battery 10 may be used not only as an operation power supply of the vehicle 1, but also as a driving power supply of the vehicle 1 to replace or partially replace fuel or natural gas to provide driving power for the vehicle 1.

As shown in FIG. 2, the battery 10 includes battery cells (not shown in FIG. 2). The battery 10 may further include a box used for accommodating the battery cells.

The box is used for accommodating the battery cells, and the box may have many structural forms. In some embodiments, the box may include a first box portion 11 and a second box portion 12. The first box portion 11 fits on the second box portion 12 with each other. The first box portion 11 and the second box portion 12 jointly define an accommodating space for accommodating the battery cells. The second box portion 12 may be of a hollow structure with one end open, the first box portion 11 is of a plate-like structure, and the first box portion 11 fits on the open side of the second box portion 12 to form the box with the accommodating space. The first box portion 11 and the second box portion 12 may both be of a hollow structure with one side open. The open side of the first box portion 11 fits on the open side of the second box portion 12 to form the box with the accommodating space. The first box portion 11 and the second box portion 12 may be in various shapes, such as cylindrical or cuboid.

To improve the sealing performance after the first box portion 11 is connected to the second box portion 12, a sealing member such as a sealant or a sealing ring may be further disposed between the first box portion 11 and the second box portion 12.

Assuming that the first box portion 11 fits on the second box portion 12, the first box portion 11 may be referred to as an upper box cover, and the second box portion 12 may be referred to as a lower box.

There may be one or more battery cells in the battery 10. If there is a plurality of battery cells, the battery cells may be connected in series, in parallel, or in series and parallel. The series-parallel connection refers to a combination of series connection and parallel connection in the plurality of battery cells. The plurality of battery cells may be directly connected in series, in parallel, or in series and parallel together, and then the whole constituted by the plurality of battery cells is accommodated in the box. Alternatively, the plurality of battery cells may be first connected in series, in parallel, or in series and parallel to form a battery module 20. Then a plurality of battery modules 20 are connected in series, in parallel, or in series and parallel to form a whole accommodated in the box.

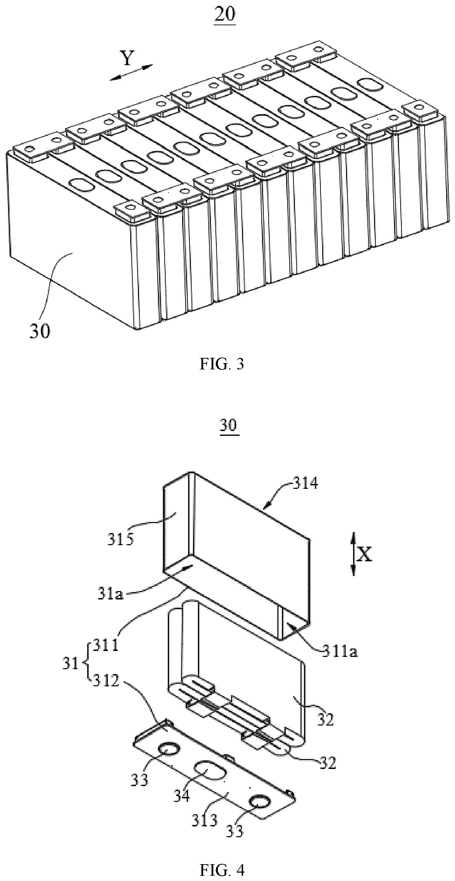

In some embodiments, referring to FIG. 3, FIG. 3 is a schematic structural view of the battery module 20 shown in FIG. 2. There is a plurality of battery cells 30 in the battery module 20. The plurality of battery cells 30 are first connected in series, in parallel, or in series and parallel to form the battery module 20. Then a plurality of battery modules 20 are connected in series, in parallel, or in series and parallel to form a whole accommodated in the box.

In some embodiments, the plurality of battery cells 30 in the battery module 20 may be electrically connected by a busbar component to achieve parallel, series, or series and parallel connection of the plurality of battery cells 30 in the battery module 20.

Referring to FIG. 4, FIG. 4 is an exploded view of the battery cell 30 shown in FIG. 3. The battery cell 30 provided in the embodiments of the present application includes an electrode assembly 32 and a housing 31, the housing 31 has an accommodating cavity, and the electrode assembly 32 is accommodated in the accommodating cavity.

In some embodiments, the housing 31 may include a shell 311 and an end cover 312, the shell 311 is of a hollow structure with one side open, and the end cover 312 fits on an opening 311a of the shell 311 to form a sealing connection, so as to form a sealed space for accommodating the electrode assembly 32 and an electrolyte.

When the battery cell 30 is assembled, the electrode assembly 32 may be first placed into the shell 311, then the end cover 312 fits on the opening of the shell 311, and the electrolyte is injected into the shell 311 via an electrolyte injection port on the end cover 312.

In some embodiments, the housing 31 may further be used for accommodating the electrolyte, such as an electrolytic solution. The housing 31 may be in various structural forms.

The shell 311 may be in various shapes, such as cylindrical or cuboid. The shape of the shell 311 may be determined by the specific shape of the electrode assembly 32. For example, if the electrode assembly 32 is of a cylindrical structure, the shell 311 may be of a cylindrical structure. If the electrode assembly 32 is of a cuboid structure, the shell 311 may be of a cuboid structure. In FIG. 4, exemplarily, both the shell 311 and the electrode assembly 32 are of a cuboid structure.

The material of the shell 311 may be various, such as copper, iron, aluminum, stainless steel, or aluminum alloy, which is not specially limited in the embodiments of the present application.

One or more electrode assemblies 32 may be accommodated in the shell 311. In FIG. 4, there are two electrode assemblies 32 accommodated inside the shell 311.

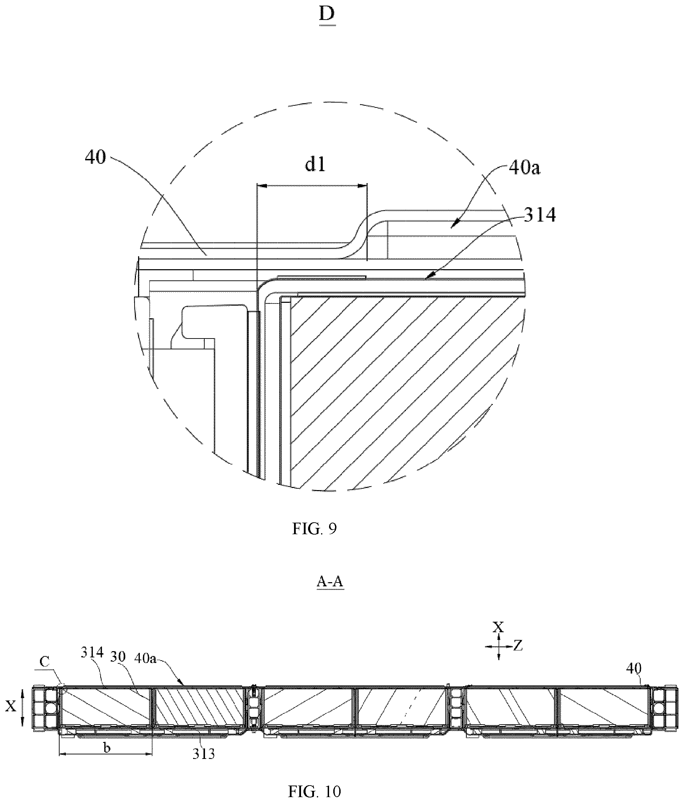

As shown in FIGs. 4, 5, 6, 7, 8, and 9, a battery 10 according to the embodiments of the present application includes a plurality of battery cells 30 and a heat exchange member 40, each of the battery cells 30 includes a housing 31 and a pressure relief mechanism 34, the housing 31 has a first wall 313 and a second wall 314 opposite to each other in a first direction X, the pressure relief mechanism 34 is disposed in the first wall 313, and the plurality of battery cells 30 are arranged at least in a second direction Y. The heat exchange member 40 is disposed at the side of the plurality of battery cells 30 close to the second walls 314, the heat exchange member 40 has a heat exchange zone 40a, the heat exchange zone 40a extends in the second direction Y and the third direction Z, and the first direction X, the second direction Y and the third direction Z intersect one another. The heat exchange zone 40a is used for heat exchange with the battery cells 30, and the second walls 314 of the plurality of battery cells 30 cover the heat exchange zone 40a.

The first direction X may be a direction of gravity. The first wall 313 is located at the side of the housing 31 down in the direction of gravity. In this case, the pressure relief mechanism 34 is located in the first wall 313. When the battery 10 is applied to an electrical apparatus such as a vehicle, the pressure relief space of the pressure relief mechanism 34 coincides with a bottom space provided for ball impact of the vehicle, so both are located below the first wall 313, which is conducive to saving the space of the vehicle and improving the compactness of the internal structure of the vehicle.

**In** the embodiment where the first direction X is the direction of gravity, the second wall 314 is located at the side of the housing 31 up in the direction of gravity. Since the heat exchange member 40 is disposed at the side of the battery cells 30 close to the second walls 314, the heat exchange member 40 is located above the battery cells 30 in the direction of gravity.

The heat exchange member 40 is disposed at the side of the plurality of battery cells 30 close to the second walls 314, so that the heat exchange member and the second walls 314 can fit each other to facilitate the heat exchange between the heat exchange member 40 and the battery cells 30. Exemplarily, the heat exchange member 40 and the second walls 314 of the battery cells 30 can be connected to each other by bonding to improve the strength of connection between the heat exchange member 40 and the battery cells 30.

If the plurality of battery cells 30 are arranged at least in the second direction Y, the plurality of battery cells 30 may be arranged only in the second direction Y, or the plurality of battery cells 30 may be arranged in both the second direction Y and the third direction Z.

The first direction X, the second direction Y and the third direction Z intersect one another. The angle between every two of the first direction X, the second direction Y and the third direction Z may be an acute angle or a right angle. For example, every two of the first direction X, the second direction Y and the third direction Z are perpendicular to each other.

Since the heat exchange member 40 is disposed at the side of the battery cells 30 close to the second walls 314, electrode terminals 33 of the battery cells 30 are not disposed in the second walls 314. The electrode terminal 33 may be disposed in the first wall 313 or in a third wall 315 of the housing 31, where the third wall 315 connects the first wall 313 and the second wall 314 and is parallel to the second direction Y. In this case, the plurality of battery cells 30 are arranged only in the second direction Y.

Optionally, the plurality of battery cells 30 are arranged in both the second direction Y and the third direction Z, and the electrode terminals 33 of the battery cells 30 may be disposed in the first walls 313.

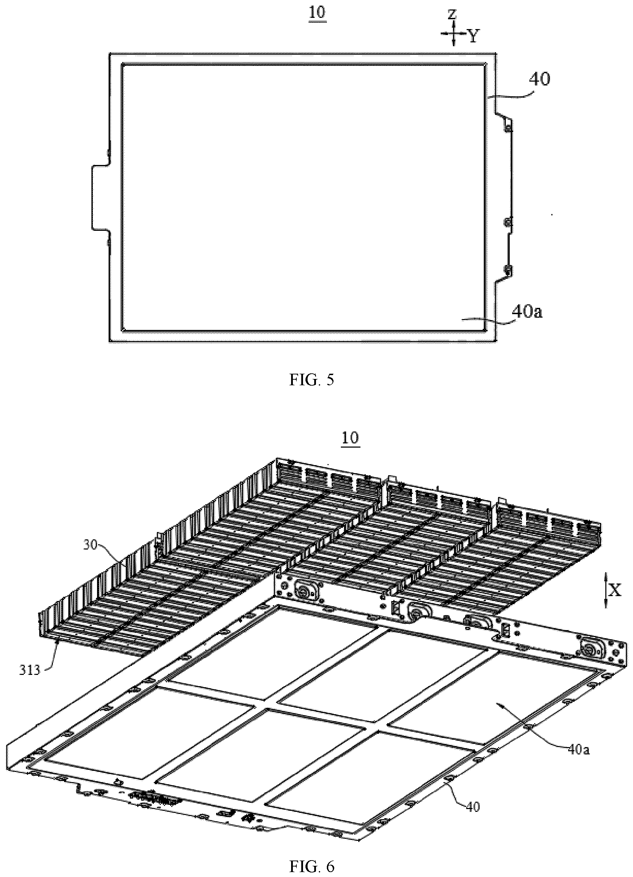

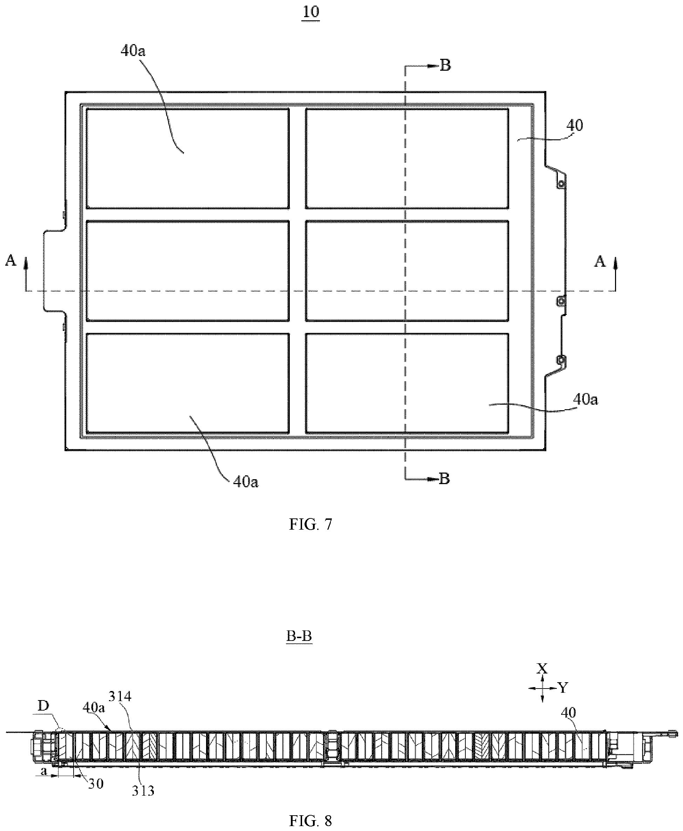

The heat exchange member 40 has a heat exchange zone 40a, and the heat exchange zone 40a extends in the second direction Y and the third direction Z. The heat exchange zone 40a is a continuous zone. Depending on different arrangement of the battery cells 30 in the battery 10, the heat exchange member 40 may have one heat exchange zone 40a, for example, the heat exchange member 40 of the battery 10 shown in FIG. 5 has one heat exchange zone 40a; or the heat exchange member 40 has a plurality of heat exchange zones 40a, and each of the heat exchange zones 40a corresponds to a plurality of battery cells 30, for example, the heat exchange member 40 of the battery 10 shown in FIG. 6 and FIG. 7 may have a plurality of heat exchange zones 40a.

Exemplarily, if the plurality of battery cells 30 inside the battery 10 are stacked and not spaced apart, the heat exchange member 40 may have one heat exchange zone 40a. Alternatively, the battery 10 may include a plurality of battery cell strings, each of the battery cell strings includes a plurality of battery cells 30 stacked at least in the second direction Y with any two of the battery cells 30 not spaced apart, and the plurality of battery cell strings are electrically connected to each other and spaced apart. In this case, the heat exchange member 40 may include a plurality of heat exchange zones 40a, and each of the heat exchange zones 40a corresponds to one battery cell string.

As the heat exchange zone 40a is used for heat exchange with the battery cells 30, a flow channel 41 may be disposed inside the heat exchange zone 40a. When the temperature of the battery cells 30 is lower than a working temperature, a high-temperature flowing medium such as liquid may flow through the flow channel 41 to heat the battery cells 30. When the temperature of the battery cells 30 is relatively high, a low-temperature flowing medium may flow through the flow channel 41 to absorb the heat of the battery cells 30 and cool the battery cells 30.

As the second walls 314 of the plurality of battery cells 30 cover the heat exchange zone 40a, edges of the heat exchange zone 40a in the second direction Y and the third direction Z are spaced apart from edges of the second walls 314 and located inside the second walls 314. Alternatively, the edges of the heat exchange zone 40a in the second direction Y and the third direction Z coincide with the edges of the second walls 314. That is, an orthographic projection of the heat exchange zone 40a in the first direction X is located within orthographic projections of the second walls 314 of the plurality of battery cells 30 in the first direction X.

Since the heat exchange zone 40a is completely covered by the second walls 314 of the battery cells 30, when the flowing medium flows through the heat exchange zone 40a, the battery cells 30 exchange heat with the heat exchange zone 40a through the second walls 314 to heat the flowing medium in the heat exchange zone 40a, thereby reducing the temperature difference between the battery cells and the internal environment of the battery 10 and reducing the possibility of producing condensate water on an outer surface of the heat exchange zone 40a.

According to the battery 10 provided in the embodiments of the present application, the second walls 314 of the plurality of battery cells 30 cover the heat exchange zone 40a of the heat exchange member 40, which reduces the possibility of producing condensate water on the surface of the heat exchange member 40, thereby reducing the risk of short circuits in the battery 10 caused by dripping of the condensate water produced on the heat exchange member 40 onto members such as electrode terminals 33 of the battery cells 30, and improving the safety performance of the battery 10.

In some embodiments, the battery cells 30 are further arranged in the third direction Z.

The battery cells 30 are arranged in both the second direction Y and the third direction Z, which is beneficial to improving internal space utilization of the battery 10 to increase the energy density of the battery 10.

As the second walls 314 of the plurality of battery cells 30 cover the heat exchange zone 40a, the edges of the heat exchange zone 40a can be spaced apart from the edges of the second walls 314 of the outermost battery cells 30 among the plurality of battery cells 30 in the second direction Y and the third direction Z, and cover the second walls 314 of the plurality of battery cells 30 on the inner side in the second direction Y and the third direction Z, that is, as long as the outermost battery cells 30 in the second direction Y and the second direction Y are not covered by the heat exchange zone 40a, and the remaining battery cells 30 on the inner side are covered by the heat exchange zone 40a, the risk of short circuits caused by dripping of the condensate water produced on the heat exchange member 40 onto members such as electrode terminals 33 is reduced while the heating or cooling effect of the battery cells 30 in the cooling zone can be ensured.

In the second direction Y and the third direction Z, the edges of the heat exchange zone 40a may coincide with or spaced apart from the outer edges of the second wall 314 of the outermost battery cell 30. In the embodiment where the two are spaced apart, the spacing therebetween may be set according to the actual situation.

As shown in FIGs. 7, 8, and 9, in some embodiments, the housing 31 has a size of a in the second direction Y, and in the second direction, a minimum distance d1 between an edge of the heat exchange zone 40a and an outer edge of the second wall 314 of the outermost battery cell 30 satisfies: d1 < a.

In this case, in the second direction Y, the heat exchange zone 40a covers the second walls 314 of the plurality of battery cells 30 close to the inner side, and is opposite to the second wall 314 of the outermost battery cell 30 in the first direction X, which reduces the risk of short circuits in the battery 10 caused by dripping of the condensate water produced in the heat exchange zone 40a onto members such as electrode terminals 33, and is conducive to improving the effect of cooling or heating the battery cells 30 by the heat exchange zone 40a, thereby further improving the safety performance of the battery 10.

In some embodiments, the size of the housing 31 in the second direction Y is less than that of the housing 31 in the third direction Z, and 10 mm ≤ d1 ≤ a/3.

Setting d1 greater than or equal to 10 mm is conducive to further reducing the possibility of producing condensate water on the surface of the heat exchange zone 40a. Setting d1 ≤ a/3 is conducive to ensuring the heat exchange effect between the heat exchange zone 40a and the outermost battery cell 30 in the second direction Y, and reducing the risk of excessively low or high temperature of the outermost battery cell 30 in the second direction Y.

As shown in FIGs. 7, 10, and 11, in some embodiments, the housing 31 has a size of b in the third direction Z, and in the third direction, a minimum distance d2 between an edge of the heat exchange zone 40a and an edge of the second wall 314 of the outermost battery cell 30 satisfies: d2 < b.

In this case, in the third direction Z, the heat exchange zone 40a covers the second walls 314 of the plurality of battery cells 30 close to the inner side, and is opposite to the second wall 314 of the outermost battery cell 30 in the first direction X, which reduces the risk of short circuits in the battery 10 caused by dripping of the condensate water produced in the heat exchange zone 40a onto members such as electrode terminals 33, and is conducive to improving the effect of cooling or heating the battery cells 30 by the heat exchange zone 40a, thereby further improving the safety performance of the battery 10.

In some embodiments, the size of the housing 31 in the third direction Z is greater than that of the housing 31 in the second direction Y, and 10 mm ≤ d2 ≤ b/6.

Setting d1 greater than or equal to 10 mm is conducive to further reducing the possibility of producing condensate water on the surface of the heat exchange zone 40a. Setting d1 ≤ b/6 is conducive to ensuring the heat exchange effect between the heat exchange zone 40a and the outermost battery cell 30 in the third direction Z, and reducing the risk of excessively low or high temperature of the outermost battery cell 30 in the third direction Z.

In some embodiments, the battery cell 30 further includes an electrode terminal 33, and the electrode terminal 33 is disposed in the first wall 313.

As the electrode terminal 33 and the pressure relief mechanism 34 are both disposed in the first wall 313, the plurality of battery cells 30 can be arranged in both the second direction Y and the third direction Z, which is beneficial to increasing the arrangement density of the battery cells 30, improving the internal space utilization of the battery 10, and further increasing the energy density of the battery 10. In addition, during the assembly of the battery 10, the first wall 313 of the battery cell 30 can be disposed downwards in the direction of gravity, and the bottom space of the battery cell 30 coincides with the pressure relief space of the battery cell 30, which save space and improve the assembly efficiency of the battery cells 30.

In some embodiments, the battery cell 30 further includes an electrode terminal 33, the housing 31 further has a third wall 315, the third wall 315 is parallel to the second direction Y, and the electrode terminal 33 is disposed in the third wall 315.

The third wall 315 can connect the first wall 313 and the second wall 314. The electrode terminal 33 is disposed in the third wall 315, the electrode terminal 33 and the pressure relief mechanism 34 are disposed in the third wall 315 and the first wall 313 of the battery cell 30 respectively, and the plurality of battery cells 30 are arranged only in the second direction Y. This is beneficial to the spaced arrangement of the plurality of battery cells 30 in the third direction Z and timely heat dissipation of the battery cells 30, thereby reducing the risk of thermal runaway in the battery cells 30.

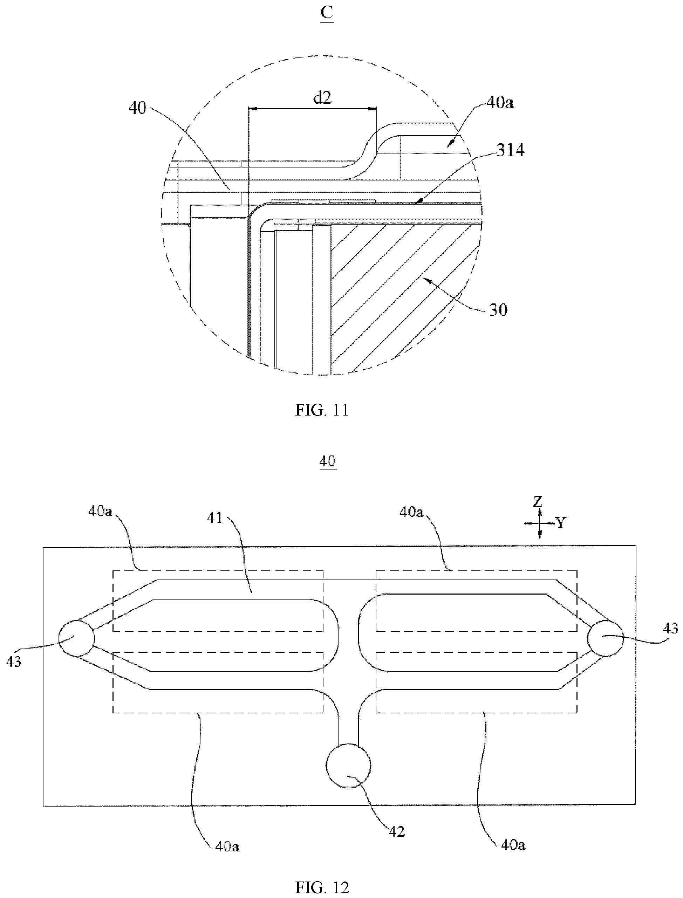

As shown in FIG. 12, in some embodiments, a flow channel 41 is provided in the heat exchange zone 40a of the heat exchange member 40, the heat exchange member 40 has a liquid inlet 42 and liquid outlets 43, and the flow channel 41 connects the liquid inlet 42 and the liquid outlets 43. The size of the heat exchange zone 40a in the second direction Y is greater than that of the heat exchange zone 40a in the third direction Z, the liquid outlets 43 are located on two sides of the heat exchange member 40 in the second direction Y, and in the second direction Y, an absolute value of the difference between the farthest distances from the liquid inlet 42 to the heat exchange zones 40a at two sides respectively is less than or equal to 100 mm.

As the flow channel 41 is provided in the heat exchange zone 40a, a flowing medium can be introduced into the flow channel 41. During flowing, the flowing medium exchanges heat with the battery cell 30, so that the flowing medium absorbs the heat of the battery cell 30 or provides heat to the battery cell 30.

The absolute value of the difference between the farthest distances from the liquid inlet 42 to the heat exchange zones 40a at two sides respectively is less than or equal to 100 mm. Exemplarily, the absolute value of the difference between the farthest distances from the liquid inlet 42 to the heat exchange zones 40a at two sides respectively may be 0, 10 mm, 20 mm, 30 mm, 40 mm, 50 mm, 60 mm, 70 mm, 80 mm, 90 mm, or 100 mm, etc.

The absolute value of the difference between the farthest distances from the liquid inlet 42 of the heat exchange member 40 to the heat exchange zones 40a at two sides respectively is less than or equal to 100 mm, that is, the liquid inlet 42 is as close as possible to the center of the heat exchange zone 40a.

Because the size of the heat exchange zone 40a in the second direction Y is greater than that of the heat exchange zone 40a in the third direction Z, and the liquid outlets 43 are located on two sides of the heat exchange member 40 in the second direction Y, when the flowing medium flows from the liquid inlet 42 to the liquid outlets 43, the flowing distance of the flowing medium in the flow channel 41 is increased, which facilitates sufficient heat exchange between the flowing medium and the battery cell 30 and improves the utilization of the flowing medium.

Still referring to FIG. 12, in some embodiments, a plurality of heat exchange zones 40a are spaced apart in the second direction Y and the third direction Z, and in the third direction Z, the flow channels 41 of any adjacent two of the heat exchange zones 40a are connected in parallel.

In this case, the flowing medium is shunted when flowing through adjacent two of the heat exchange zones 40a in the third direction Z, and flows to the liquid outlets 43 after passing through the plurality of heat exchange zones 40a arranged in the third direction Z, thereby reducing the risk of circulation of the flowing medium in the plurality of heat exchange zones 40a and improving the heat exchange effect between the cold flowing medium and the battery cells 30.

In some embodiments, the heat exchange member 40 has a plurality of heat exchange zones 40a, the heat exchange member 40 further includes a connecting flow channel, and the connecting flow channel connects the two flow channels 41 of adjacent two of the heat exchange zones 40a. The battery 10 further includes a busbar, the busbar electrically connects the battery cells 30 corresponding to adjacent two of the heat exchange zones 40a, and a projection of the connecting flow channel on the heat exchange member 40 in the first direction X is staggered with a projection of the busbar on the heat exchange member 40 in the first direction X.

As the connecting flow channel connects adjacent two of the heat exchange zones 40a, the flowing medium flows through the connecting flow channel when flowing between the heat exchange zones 40a. When the flowing medium is a cooling medium, it is also prone to produce condensate water on the outer surface of the flow channel.

The busbar connects the battery cells 30 corresponding to adjacent two of the heat exchange zones 40a, so as to achieve the series or parallel connection of the battery cells 30 corresponding to adjacent two of the heat exchange zones 40a, namely, adjacent two of the battery cell strings.

Staggering the projections of the connecting flow channel and the busbar on the heat exchange member 40 in the first direction X is beneficial to reducing the risk of dripping of the condensate water produced at the flow channels 41 onto the busbar, and further improving the safety performance of the battery 10.

In some embodiments, the battery 10 includes a plurality of battery cells 30 and a heat exchange member 40. Each of the battery cells 30 includes a housing 31, an electrode terminal 33, and a pressure relief mechanism 34. The housing 31 has a first wall 313 and a second wall 314 opposite to each other in a first direction X. The pressure relief mechanism 34 and the electrode terminal 33 are disposed in the first wall 313. The plurality of battery cells 30 are arranged in a second direction Y and a third direction Z. The heat exchange member 40 is disposed at the side of the plurality of battery cells 30 close to the second walls 314, the heat exchange member 40 has a heat exchange zone 40a, the heat exchange zone 40a extends in the second direction Y and the third direction Z, and the first direction X, the second direction Y and the third direction Z intersect one another. The heat exchange zone 40a is used for heat exchange with the battery cells 30, and the second walls 314 of the plurality of battery cells 30 cover the heat exchange zone 40a. The housing 31 has a size of a in the second direction Y and a size of b in the third direction Z, and a is smaller than b. In the second direction Y, a minimum distance d1 between an edge of the heat exchange zone 40a and an outer edge of the second wall 314 of the outermost battery cell 30 satisfies: 10 mm ≤ d1 ≤ a/3. In the third direction Z, a minimum distance d2 between an edge of the heat exchange zone 40a and an edge of the outermost second wall 314 satisfies: 10 mm ≤ d2 ≤ b/6.

In this case, on the premise of ensuring the heat exchange effect between the heat exchange zone 40a and the outermost battery cell 30 in the second direction Y and the third direction Z and reducing the risk of excessively low or high temperature of the outer battery cell 30, the possibility of producing condensate water on the surface of the heat exchange member 40 can be reduced, thereby reducing the risk of short circuits in the battery 10 caused by dripping of the condensate water produced on the heat exchange member 40 onto members such as electrode terminals 33 of the battery cells 30, and improving the safety performance of the battery 10.

An electrical apparatus provided by the present application includes the battery cells 30 provided in any of the above embodiments, where the battery cells 30 are used for providing electrical energy. In the direction of gravity, the first wall 313 is located below the housing 31.

As the pressure relief mechanism 34 is disposed downwards in the direction of gravity, the pressure relief space of the battery 10 coincides with the bottom space provided for ball impact of the electrical apparatus, which is conducive to improving the utilization of vehicle chassis space. The second walls 314 of the plurality of battery cells 30 cover the heat exchange zone 40a, which can reduce the possibility of dripping of condensate water produced on the heat exchange member 40 onto members such as electrode terminals 33 of the battery cells 30, and improve the safety performance of the battery 10.

Although the present application is described with reference to the preferred embodiments, various improvements can be made and components therein can be replaced with equivalents without departing from the scope of the present application. In particular, as long as there is no structural conflict, various technical features mentioned in the embodiments can be combined in any way. The present application is not limited to the specific embodiments disclosed herein, but includes all technical solutions falling within the scope of the claims.

## Claims

1. **A battery,** comprising:
a plurality of battery cells, each of the battery cells comprising a housing and a pressure relief mechanism, the housing having a first wall and a second wall opposite to each other in a first direction, the pressure relief mechanism being disposed in the first wall, and the plurality of battery cells being arranged at least in a second direction; and
a heat exchange member, the heat exchange member being disposed at a side of the plurality of battery cells close to the second walls, the heat exchange member having a heat exchange zone, the heat exchange zone extending in the second direction and a third direction, and the first direction, the second direction and the third direction intersecting one another; the heat exchange zone being configured for heat exchange with the battery cells, and the second walls of the plurality of battery cells covering the heat exchange zone.

2. The battery according to claim 1, wherein the housing has a size of a in the second direction, and in the second direction, a minimum distance d1 between an edge of the heat exchange zone and an outer edge of the second wall of the outermost battery cell satisfies: d1 < a.

3. The battery according to claim 2, wherein the size of the housing in the second direction is less than that of the housing in the third direction, and 10 mm ≤ d1 ≤ a/3.

4. The battery according to any one of claims 1 to 3, wherein the housing has a size of b in the third direction, and in the third direction, a minimum distance d2 between the edge of the heat exchange zone and an edge of the second wall of the outermost battery cell satisfies: d2 < b.

5. The battery according to claim 4, wherein the size of the housing in the third direction is greater than that of the housing in the second direction, and 10 mm ≤ d2 ≤ b/6.

6. The battery according to any one of claims 1 to 5, wherein each of the plurality of battery cells further comprises an electrode terminal, and the electrode terminal is disposed in the first wall.

7. The battery according to any one of claims 1 to 5, wherein each of the plurality of battery cells further comprises an electrode terminal, the housing further has a third wall that is parallel to the second direction, and the electrode terminal is disposed in the third wall.

8. The battery according to any one of claims 1 to 7, wherein a flow channel is provided in the heat exchange zone of the heat exchange member, the heat exchange member has a liquid inlet and liquid outlets, and the flow channel connects the liquid inlet and the liquid outlets; and
a size of the heat exchange zone in the second direction is greater than that of the heat exchange zone in the third direction, the liquid outlets are located at two sides of the heat exchange member in the second direction, and in the second direction, an absolute value of a difference between farthest distances from the liquid inlet to the heat exchange zones at two sides respectively is less than or equal to 100 mm.

9. The battery according to claim 8, wherein a plurality of the heat exchange zones are spaced apart in the second direction and the third direction, and in the third direction, the flow channels of any adjacent two of the heat exchange zones are connected in parallel.

10. The battery according to claim 8 or 9, wherein the heat exchange member has a plurality of the heat exchange zones, the heat exchange member further comprises a connecting flow channel, and the connecting flow channel connects two of the flow channels of adjacent two of the heat exchange zones; and
the battery further comprises a busbar, the busbar electrically connects the battery cells corresponding to adjacent two of the heat exchange zones, and a projection of the connecting flow channel on the heat exchange member in the first direction is staggered with a projection of the busbar on the heat exchange member in the first direction.

11. An electrical apparatus, comprising the battery according to any one of claims 1 to 10, wherein the battery is configured for providing electrical energy; and the first wall is located below the housing in a direction of gravity.
